# EUROPEAN PATENT SPECIFICATION

(11) **EP 1 166 142 B1**
(45) Date of publication and mention of the grant of the patent: **19.03.2003**
(21) Application number: 00912813.3
(22) Date of filing: 24.03.2000
(51) Int. Cl.: G01S 1/02, G01S 5/14

(54) **POSITION FINDING**
ORTUNG
LOCALISATION

(30) Priority: 26.03.1999 GB 9907123
(43) Date of publication of application: 02.01.2002
(73) Proprietor: Pointstar A/S, 6400 Sonderborg (DK)
(72) Inventor: BIDE, Stephen, DK-6100 Haderslev (DK)
(74) Representative: Hogg, Jeffery Keith
(86) International application number: GB0001145
(87) International publication number: WO00058744

(56) References cited:
- WO-A-98/43045
- DE-A- 19 501 879
- US-A- 5 210 540
- US-A- 5 646 857
- US-A- 5 702 070

## Description

This application relates to position finding and locator apparatus. In particular, this application relates to locator apparatus comprising receiver means which determines position using wireless signals from beacons.

A known position finding method (US Pat. Nos. 5646857 & 5210540) relies on the augmentation of the Global Positioning System (GPS) satellite-based radio beacon system by coupling a barometric altimeter to the earth-based GPS receiver.

A terrestrial GPS receiver can determine its 3D position by reference to signals received passively from a network of suitably spaced geostationary satellites. However, a GPS receiver can only receive from those satellites which are in line of sight and furthermore requires signals from at least four satellites at once in order to perform accurate 3D position finding. The GPS system can therefore easily be compromised in e.g. covered, built-up or heavily foliated areas, where a receiver does not have line of sight to a requisite number of satellites. GPS reliability is even substantially reduced by bad weather conditions, and GPS accuracy is in any case deliberately degraded in connection with civilian use.

The addition of an accurate barometric altimeter could in principle augment satellite derived position co-ordinates with an altitude co-ordinate derived from a different source, thereby theoretically reducing the number of simultaneous satellite signals required for 3D positioning.

However, in order to work effectively the barometric altimeter requires continuous calibration to allow for local terrestrial weather-dependent air-pressure conditions. Reference data for this purpose can only be supplied from a network of local terrestrial air-pressure monitoring stations spaced at relatively close intervals. Being positioned in space, the GPS system makes no provision for either the collection or dissemination of such data.

A terrestrial radio beacon system, on the other hand, suffers by definition from being arrayed in one plane i.e. on the earth's surface, and thereby only being able to provide positioning in 2 dimensions. Furthermore, the earth's natural curvature inhibits useful reception at long range preventing even this level of functionality unless the beacons are very closely spaced. Under normal circumstances the deployment of such a closely-spaced terrestrial beacon system world-wide would be both prohibitively expensive and politically unfeasible.

It is an aim of the present invention to remedy the current inherent inadequacies of barometric altimeter augmented position finding by combining the positioning data broadcast by beacons with locally-derived air-pressure reference data derived from reference barometric sensors.

According to a first aspect, the invention relates to a method of determining the position of a locator apparatus using one or more beacons that transmit wireless signals, the method comprising the steps of providing the locator apparatus with receiver means to receive signals from the beacons, determining the position of the locator apparatus using signals from said beacons and determining the height or altitude of the locator apparatus using a barometer means which is calibrated using barometric information included in signals from said beacons.

According to a second aspect, the invention consists in locator apparatus comprising receiver means for receiving wireless signals from beacons, barometer means and processing means for determining the position of the locator apparatus from the signals and for extracting barometric information from the signals and using it to calibrate the barometer means. Preferably, the processing means uses barometric information from the barometer means to determine the altitude, vertical position or height of the locator device.

According to a third aspect, the invention consists in a beacon of known 3D position (latitude, longitude and altitude) arranged to transmit a signal, which can be used by a receiver to determine its position and which is combined with barometric information about the locality of the beacon for calibration of a barometer at the receiver.

Advantageously, the beacon has barometer means for determining, or storage means for storing, barometric information about its locality.

According to one embodiment, the present invention avoids reliance on satellites for positioning, and instead makes possible an effective 3D implementation of terrestrially originated 2D signals, preferably employing a network of closely spaced transmitters which utilise RF signal carrier types which are less affected by obstructions in the environment (such as the digital audio broadcasting - DAB - system), permitting more efficient position finding in, eg., built-up urban environments, poor weather and even within buildings.

According to another embodiment, the system is employed to supplement a satellite-based positioning system (like GPS) by transmitting local barometric reference data to satellites, which could then in turn be retransmitted to terrestrial positioning receivers with the positioning signal.

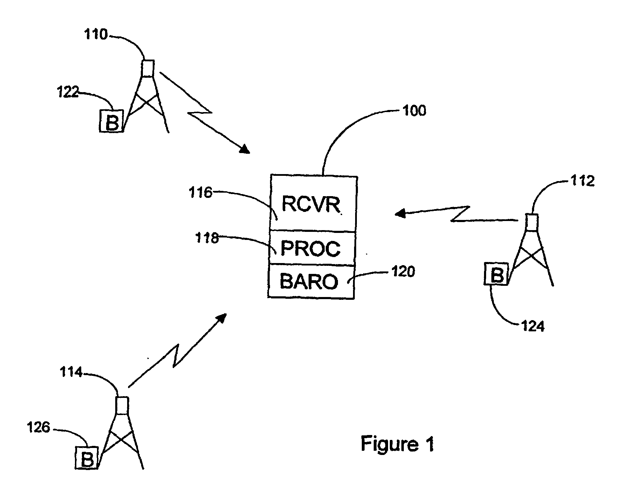

Further aspects and advantages of the invention will be apparent to a person skilled in this art upon consideration of the following embodiments of the invention which are described by way of example only and with reference to the following drawing, Figure 1, which illustrates schematically a location finding system.

Figure 1 shows a location finding system comprising a locator device 100 and a network of ground based transmitters, three of which are shown: 110, 112 and 114.

The locator device 100 comprises a receiver 116, a processor 118 and a barometer 120. The receiver 116 receives the signals from those transmitters 110, 112 and 114 which are within range and the processor 118 uses the received wireless signals, which are preferably radio or microwave frequency signals, to deduce the position of the locator device relative to the transmitters. For example, the processor 118 could establish the two-dimensional position of the locator device by triangulating using signals from at least three of the transmitters 110, 112 and 114 in the transmitter network. The receiver 116 also receives barometric information which is transmitted from the transmitters in the network as part of the positioning signals. The processor 118 uses this barometric information to determine the vertical position of the locator device as will be described later.

At least some of the transmitters in the network are of known altitude (as ascertained from, e.g., survey data) and are capable of transmitting barometric information comprising the air pressure in the locality of the transmitter. (In another embodiment, to provide finer geographical resolution of air pressure variation, all of the transmitters in the network are of known altitude and are capable of transmitting barometric information comprising the air pressure in their locality.) To do this, a transmitter, eg. 110, can be provided with a barometer 122 which provides accurate barometric information for encoding and transmission by the transmitter 110 as part of the signal intended for use in position finding. Alternatively, the barometric information could be provided to the transmitter from a memory device which stores the current or most recent value of the air pressure in the locality of the transmitter. The barometric information in the memory device at a transmitter site could itself be supplemented, checked and enhanced by comparison with barometric information from neighbouring sites by monitoring the signals from neighbouring sites. In Figure 1, each of the three illustrated network transmitters 110, 112 and 114, is of known altitude, has its own respective local barometer 122, 124 and 126, and is therefore capable of transmitting barometric calibration information regarding its own locality.

Returning to the locator device 100, the processor 118 uses its local air pressure as measured by the integral barometer 120 to determine the vertical position of the locator device 100 in a known manner. In order to ensure accurate vertical position measurements, the integral barometer 120 is calibrated using the barometric information received from transmitters in the network. If the locator device 100 receives barometric information from more than one transmitter, then it could determine the barometric data for use in the calibration process by calculating which of the transmitters broadcasting barometric information is nearest and using the barometric information from that transmitter, or it could determine the barometric information for use in the calibration process by performing a weighted average of the barometric information received from several transmitters by assigning weights on the basis of the distance to those transmitters from which barometric information is being received.

It will be appreciated that the numbers of transmitters and locator devices shown in Figure 1 are not limiting. More than one locator device can operate within the network of transmitters and the network would ideally comprise far more than the three transmitters shown.

In an alternative embodiment, the locator device 100 does not need to receive signals from more than one transmitter. For example, the locator device could be used to follow a "beam" broadcast by a beacon, the beacon signal also containing barometric information. In this embodiment, the locator device would use the barometric information contained in the beacon signal to calibrate the integral barometer for vertical position measurements when following the transmitter "beam".

It will be appreciated that the locator device has utility in various scenarios. The locator device could be provided as a hand held unit to assist persons engaged in outdoor activities or it could be installed in any kind of vehicle.

In a further embodiment, the locator device includes a transmitter for return transmission of information about its position to a central station or to mobile peer locator devices for tracking purposes. The same network of transmitters could be employed for transmitting the position information to its destination.

## Claims

1. A method of determining the position of a locator apparatus (100) using one or more beacons (110,112,114) that transmit wireless signals, the method comprising the steps of providing the locator apparatus with receiver means (116) to receive signals from the beacon(s) (110,112,114), determining the position of the locator apparatus (100) using signals from said beacon(s) (110, 112, 114) and determining the height or altitude of the locator apparatus using a barometer means (120), **characterized in that** said barometer means (120) is calibrated using barometric information included in signals from said beacon(s) (110,112,114).

2. A method according to claim 1, comprising the step of using signals from more than one beacon (110,112,114) to calibrate the barometer means (120).

3. A method according to claim 1 or 2, comprising the step of transmitting the determined position of the locator device (100) to a receiver.

4. Locator apparatus (100) comprising receiver means (116) for receiving wireless signals from beacons (110,112,114), barometer means (120) for determining the height or altitude of the locator apparatus (100) and processing means (118) for determining the position of the locator apparatus (100) from the signals, **characterized in that** said processing means (118) is arranged to extract barometric information from the signals and use it to calibrate the barometer means (120).

5. Locator apparatus (100) according to claim 4, wherein the processor means (118) is arranged to calibrate the barometer means (120) using signals from more than one beacon (110,112,114).

6. Locator apparatus (100) according to claim 4 or 5, further comprising a transmitter to transmit the determined position of the apparatus to a receiver.

7. A beacon (110,112,114) of known position arranged to transmit a signal, which can be used by a receiver (116) to determine its position, **characterized in that** said signal is combined with barometric information about the locality of the beacon for calibration of a barometer (120) at the receiver.

8. A beacon (110,112,114) according to claim 7, further comprising a barometer means (122,124,126) for determining barometric information about its locality.

9. A beacon (110,112,114) according to claim 7 or 8, comprising storage means for storing barometric information about its locality.

10. A beacon (110,112,114) according to claim 7, comprising storage means for storing barometric information about a locality.

11. A position finding system comprising at least one locator apparatus (100) according to any one of claims 4 to 6 and at least one beacon (110,112,114) according to any one of claims 7 to 10.

## Patentansprüche

1. Verfahren zum Bestimmen der Position einer Positionierungsvorrichtung (100) unter Verwendung eines oder mehrerer Funkfeuer (110, 112, 114), welche drahtlose Signale übertragen, wobei das Verfahren die Schritte umfaßt, die Positionierungsvorrichtung mit einer Empfängereinrichtung (116) zum Empfangen von Signalen von den Funkfeuern (110, 112, 114) zu versehen, die Position der Positionierungsvorrichtung (100) unter Verwendung von Signalen von dem Funkfeuer (den Funkfeuern) (110, 112, 114) zu bestimmen und die Orts- bzw. Flughöhe der Positionierungsvorrichtung unter Verwendung einer Barometereinrichtung (120) zu bestimmen, **dadurch gekennzeichnet, daß** die Barometereinrichtung (120) unter Verwendung barometrischer Informationen, welche in den Signalen von dem Funkfeuer (den Funkfeuern) (110, 112, 114) enthalten sind, kalibriert wird.

2. Verfahren nach Anspruch 1, umfassend den Schritt, Signale von mehr als einem Funkfeuer (110, 112, 114) zu verwenden, um die Barometereinrichtung (120) zu kalibrieren.

3. Verfahren nach Anspruch 1 oder 2, umfassend den Schritt, die bestimmte Position der Positionierungsvorrichtung (100) zu einem Empfänger zu übertragen.

4. Positionierungsvorrichtung (100), umfassend eine Empfängereinrichtung (116) zum Empfangen drahtloser Signale von Funkfeuern (110, 112, 114), eine Barometereinrichtung (120) zum Bestimmen der Orts- bzw. Flughöhe der Positionierungsvorrichtung (100) und eine Verarbeitungseinrichtung (118) zum Bestimmen der Position der Positionierungsvorrichtung (100) aus den Signalen, **dadurch gekennzeichnet, daß** die Verarbeitungseinrichtung (118) geeignet aufgebaut ist, um barometrische Informationen aus den Signalen zu entnehmen und diese zu verwenden, um die Barometereinrichtung (120) zu kalibrieren.

5. Positionierungsvorrichtung (100) nach Anspruch 4, wobei die Verarbeitungseinrichtung (118) geeignet aufgebaut ist, um die Barometereinrichtung (120) unter Verwendung von Signalen von mehr als einem Funkfeuer (110, 112, 114) zu kalibrieren.

6. Positionierungsvorrichtung (100) nach Anspruch 4 oder 5, ferner umfassend einen Sender, um die bestimmte Position der Vorrichtung zu einem Empfänger zu übertragen.

7. Funkfeuer (110, 112, 114) mit bekannter Position, welches geeignet aufgebaut ist, um ein Signal zu übertragen, welches durch einen Empfänger (116) verwendet werden kann, um dessen Position zu bestimmen, **dadurch gekennzeichnet, daß** das Signal zur Kalibrierung eines Barometers (120) bei dem Empfänger mit barometrischen Informationen über den Ort des Funkfeuers kombiniert wird.

8. Funkfeuer (110, 112, 114) nach Anspruch 7, ferner umfassend eine Barometereinrichtung (122, 124, 126) zum Bestimmen barometrischer Informationen über deren Ort.

9. Funkfeuer (110, 112, 114) nach Anspruch 7 oder 8, umfassend eine Speichereinrichtung zum Speichern barometrischer Informationen über dessen Ort.

10. Funkfeuer (110, 112, 114) nach Anspruch 7, umfassend eine Speichereinrichtung zum Speichern barometrischer Informationen über einen Ort.

11. Positionsbestimmungssystem, umfassend mindestens eine Positionierungsvorrichtung (100) nach einem der Ansprüche 4 bis 6 und mindestens ein Funkfeuer (110, 112, 114) nach einem der Ansprüche 7 bis 10.

## Revendications

1. Procédé pour déterminer la position d'un appareil localiseur (100) utilisant une ou plusieurs balise(s) (110, 112, 114) qui transmettent des signaux radio, le procédé comprenant l'étape de doter l'appareil localiseur d'un moyen de réception (116) pour recevoir des signaux du ou des balise(s) (110, 112, 114), l'étape de déterminer les positions de l'appareil localiseur (100) en utilisant les signaux de cette ou de ces balise(s) (110, 112, 114) et l'étape de déterminer la hauteur ou l'altitude de l'appareil localiseur en utilisant un moyen barométrique (120) **caractérisé en ce que** le moyen barométrique (120) est étalonné en utilisant l'information barométrique contenue dans les signaux provenant de la ou des balise(s) (110, 112, 114).

2. Procédé selon la revendication 1 comprenant l'étape d'utilisation des signaux provenant de plus d'une balise (110, 112, 114) pour étalonner le moyen barométrique (120).

3. Procédé selon la revendication 1 comprenant l'étape de transmission de la position déterminée de l'appareil localiseur (100) à un récepteur.

4. Appareil localiseur (100) comprenant un moyen de réception (116) pour la réception des signaux radio provenant des balises (110, 112, 114), un moyen barométrique (120) pour déterminer la hauteur ou l'altitude de l'appareil localiseur (100) et un moyen de traitement (118) pour déterminer la position de l'appareil localiseur (100) à partir des signaux, **caractérisé en ce que** ce moyen de traitement (118) est prévu pour extraire l'information barométrique à partir des signaux et l'utiliser pour étalonner le moyen barométrique (120).

5. Appareil localiseur (100) selon la revendication 4 dans lequel le moyen de traitement (118) est prévu pour étalonner le moyen barométrique (120) en utilisant les signaux provenant de plus d'une balise (110, 112, 114).

6. Appareil localiseur (100) selon la revendication 4 ou 5 comprenant en outre un transmetteur pour transmettre la position déterminée de l'appareil à un récepteur.

7. Balise (110, 112, 114) de position connue prévue pour transmettre un signal, pouvant être utilisé par un récepteur (116) pour déterminer sa position **caractérisé en ce que** ce signal est combiné avec l'information barométrique portant sur l'emplacement de la balise pour l'étalonnage d'un baromètre (120) au niveau du récepteur.

8. Balise (110, 112, 114) selon la revendication 7, comprenant en outre un moyen barométrique (122, 124, 126) pour déterminer l'information barométrique sur son emplacement.

9. Balise (110, 112, 114) selon la revendication 7 ou 8 comprenant des moyens de mémoire pour mettre en mémoire l'information barométrique sur son emplacement.

10. Balise (110, 112, 114) selon la revendication 7, comprenant des moyens de mémoire pour mettre en mémoire l'information barométrique sur son emplacement.

11. Système de détection de position comprenant au moins un appareil localiseur (100) selon l'une quelconque des revendications 4 à 6 et au moins une balise (110, 112, 114) selon l'une quelconque des revendications 7 à 10.
